# EUROPEAN PATENT APPLICATION

(11) **EP 3 035 603 A1**
(43) Date of publication of application: **22.06.2016**
(21) Application number: 14307028.2
(22) Date of filing: 15.12.2014
(51) Int. Cl.: H04L 12/28, H04L 12/24

(54) **Device and method for re-initializing a virtualized home equipment**

(71) Applicant: ALCATEL LUCENT, 92100 Boulogne-Billancourt (FR)
(72) Inventor: Justen, Pascal, 2018 Antwerpen (BE); Bouchat, Christele, 2018 Antwerpen (BE); Six, Erwin, 2018 Antwerpen (BE)
(74) Representative: ALU Antw Patent Attorneys

(57) **Abstract**

A device and method for re-initializing of a virtualized home equipment in a broadband virtual architecture is described. The virtualized home equipment comprises at least one local home equipment in a respective home network environment which is associated to a virtual home equipment in a virtual home environment controller of the internet telecommunication network. The virtualized home equipment is running a first part of the home equipment functionality on the local home equipment and a second part of the home equipment functionality on the virtual home equipment. Each virtual home equipment is associated to a respective user subscription. The method comprises actuating by a user an actuating interface of the local home equipment, whereby the user being associated by means of a user subscription to the local home equipment; and transmitting by a transmitter towards the virtual home environment controller a predefined message that comprises a reference to the user subscription; and upon reception of the message by the virtual home environment controller, determining the virtual home equipment based upon the received user subscription and re-initializing the determined virtual home equipment accordingly. (Figure 1).

## Description

The present invention relates to a re-initializing device and a method for re-initializing a virtualized home equipment.

Home network environments with residential gateways in broadband deployment are good candidates for being virtualized, as described in WT-317 of BBF - Residential: Network Enhanced Residential Gateway. When a residential gateway is virtualized - virtual residential gateway - part of the home services which are normally hosted by the residential gateway are running elsewhere. The working text WT-317 describes several scenarios. One of the presented scenarios is that the home services are running in the cloud.

The Network enhanced residential gateway - WT 317 - Revision 06 dd February 2014 describes at page 12 that a residential gateway located at the customer premises terminates the home network and connects the Local Area Network (LAN) devices to the Internet or to some service platforms through the broadband access network. Over the years the residential gateway has evolved from a simple modem to a smart and complex residential gateway. Cloud services for residential customers have become commoditized thanks to the generalization of a number of technologies and techniques used in datacenters (virtualization, storage) and the emergence of a new generation of technologies or network concepts such as Network Function Virtualization NFV and Software Defined Networks SDN.

A Network Enhanced Residential Gateway NERG architecture consists in shifting most of the networking and service functions of the residential gateway to the network so as to extend the domestic Local Area Network (LAN) outside the customer home. Functions such as IP forwarding, routing, Network Address Translation NAT and IP addressing related function are located on the virtual gateway. The forwarding plane of the gateway that remains located on the customer's side (e.g. wired and wireless (e.g. wifi, but also for example zigbee) LAN interfaces) (ok) is configured in bridge mode.

Re-initializing of a home equipment can be explained as assigning an initial value to a variable or storage location of this home equipment; setting variables, counters, switches, etc. to their starting values; resetting the services on the home equipment or preparing the home equipment for reuse by clearing previous data from memory.

Often a user of the home equipment calls a helpdesk in order to get support for the resetting of its services in case of troubles.

Furthermore, in the event when an end-user desires e.g. to reset its services which are running on the virtual Residential Gateway, or desires e.g. to receive a firmware roll-back because the last version is stucked, the user can push on a physical button on the home equipment. The user resets as such the local home equipment only, but is not resetting the services nor the software that runs now in a virtual home equipment which is located outside his home device. A possible solution for the user would be to contact the helpdesk of his service providers which is time consuming for the end-user, and costly for the service providers.

An object of the present invention is to provide a re-initializing device and a method for re-initializing a virtualized home equipment without the need for service support.

According to the invention, this object is achieved due to the fact that the basic idea of the present application aims to have a physical means on the local home equipment for initiating by the user the aimed re-initialization but which acts upon services that are running outside the home equipment.

Indeed, the method for re-initializing a virtualized home equipment in a broadband virtual architecture is defined with the different steps here below. The virtual home equipment comprises at least one local home equipment in a respective home network environment which is associated to a virtual home equipment in a virtual home environment controller of the internet telecommunication network. The virtualized home equipment runs a first part of the home equipment functionality on the local home equipment and a second part of the home equipment functionality on the virtual home equipment. The virtual home equipment and its hosted, embodied and comprised services are associated to a respective user subscription. The method comprises the steps of :
- actuating by a user an actuating interface of the local home equipment, the user being associated by means of a user subscription to the local home equipment; and
- transmitting by a transmitter towards the virtual home environment controller a predefined message that comprises a reference to the user subscription; and
- upon reception of the message by the virtual home environment controller determining the virtual home equipment based upon the received user subscription and re-initializing the determined virtual home equipment accordingly.

In a similar way a re-initializing device for re-initializing a virtualized home equipment in a broadband virtual architecture is defined. The virtualized home equipment comprises at least one local home equipment in a respective home network environment and, being associated thereto, a virtual home equipment in a virtual home environment controller in the internet telecommunication network. The local home equipment is enabled to execute a first part of the home equipment functionality and the virtual home equipment is enabled to execute a second part of the home equipment functionality. Each virtual home equipment is associated to a user subscription. The re-initializing device is comprised in the local home equipment and comprises :
- an actuating interface for being actuated by a user, the user being associated by means of a user subscription to the local home equipment; and
- a transmitter for transmitting towards the virtual home environment controller a predefined message that comprises a reference towards the user subscription in order to enable the virtual home environment controller to determine the virtual home equipment based upon the received user subscription and to re-initialize the virtual home equipment accordingly.

This solution allows the end-user, by a simple touch, to re-initialize his services, re-install his software, reset his machine, even though those service are running on a virtual machine outside the physical local home equipment. In this way the end-user avoids to phone to the helpdesk each time that the end-user encounters a problem with his virtual machine.

By stimulating the actuating interface e.g. by pressing a button, a message is sent towards the control part of the virtual machine i.e. the virtual home environment controller such as e.g. OpenStack. This control part of the virtualized home equipment triggers a reset or reboot or re-install of the associated virtual home equipment machine for the respective local home equipment such as e.g. a residential gateway.

The method for re-initializing a virtualized home equipment might further comprise a step of interpreting by an interpreting means of the local home equipment anyone of the way of executing the actuating step and the actuated part of the actuating interface and determining thereby at least one of a type of re-initialization and an affected equipment being anyone of the local home equipment and the virtual home equipment.

The type of re-initialization can be implemented by anyone of a restarting of the virtualized home equipment and a rebooting of the virtualized home equipment.

It has to be explained that a rebooting is often called a hard reboot whereby the trigger to re-initialize is not propagated up to the affected device such as e.g. the virtual home equipment. The trigger is instead processed by a previous device which generates on its turn a command towards the hypervisor. for restarting the virtual home equipment. Otherwise, a restart is often called a soft reboot whereby the affected device e.g. the virtual home equipment that needs to be re-initialized receives the trigger and processes this trigger by itself in order to restart its itself. A third variant is a software roll-back i.e. terminating the software of the current virtual machine and restarting it with the original image i.e. the image that was used at very first startup.

The method for re-initializing a virtualized home equipment might further comprise in the predefined message a reference towards the type of initialization i.e. upon generation of the predefined message by the transmitter and the inclusion of the reference towards the user subscription in the message, also a reference towards the type of re-initialization is included as well. It has to be explained that the term "reference" means a kind of information or indication which might be included according to an explicit e.g. one identification per type of re-initialization, or an implicit way e.g. embodied in the message-identifier.

In the event when the home network environment comprises a residential gateway the local home equipment might be implemented by means of a bridge or a routed modem.

The method for re-initializing a virtualized home equipment might further comprise as a result of execution of said step of actuating that a further local message is generated whereby also the local home equipment is re-initialized.

The present method for re-initializing of a virtualized home equipment can be further implemented by defining the reference towards the user subscription by anyone of a reference towards the associated virtual home equipment and a reference towards the local home equipment.

Finally also a virtual home environment controller is defined in an internet telecommunication network for re-initializing a virtualized home equipment in a broadband virtual architecture. As mentioned before, the architecture comprises at least one local home equipment in a respective home network environment. The local home equipment is associated to a virtual home equipment being comprised in the virtual home environment controller. The local home equipment is enabled to execute a first part of the home equipment functionality and the virtual home equipment is enabled to execute a second part of the home equipment functionality. The virtual home environment equipment comprises a memory for storing an association between each virtual home equipment i.e. typically a virtual machine unique instance identifier and its user subscription. Furthermore the virtual home environment controller comprises a receiver for receiving, from a re-initialization device according to the present invention, a predefined message that comprises a reference towards a user subscription and for determining a virtual home equipment based upon the received reference. The receiver further generates a re-initialization signal for re-initializing the determined virtual home equipment.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

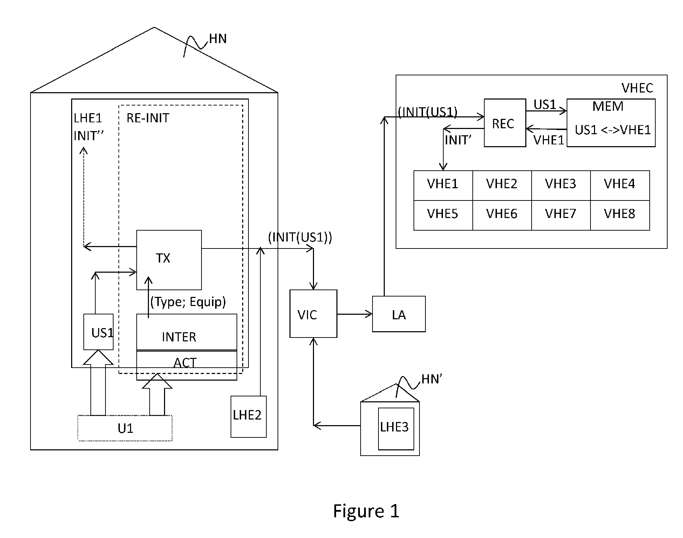

The above and other objects and features of the invention will become more apparent and the invention itself will be best understood by referring to the following description of an embodiment taken in conjunction with the accompanying drawings wherein Figure 1 represents an internet telecommunication network with a virtualized home equipment in a broadband virtual architecture.

The working of the device according to the present invention in accordance with its telecommunication environment that is shown in Figure 1 will be explained by means of a functional description of the different blocks shown therein. Based on this description, the practical implementation of the blocks will be obvious to a person skilled in the art and will therefor not be described in details. In addition, the principle working of the method to re-initialize a virtualized home equipment will be described in further detail.

Referring to Figure 1 a home network HN that comprises a local home equipment LHE1 is shown. In order to avoid limitation, it has to be understood that in the telecommunication environment of Figure 1, also other home networks might be comprises such as home network HN' that might comprise also one or more local home equipments such as local home equipment LHE3. Moreover, the home network HN1 might comprise more than one local home equipment. As a matter of example local home equipment LHE2 is shown. The local home equipments such as LHE2 and LHE3 might as well comprise the following functional blocks of the present inventions.

A user U1 is able to provide a user subscription to the local home equipment and is able to actuate an actuating interface ACT. These actions are both shown in Figure 1. The local home equipment LHE1 comprises the re-initialization device RE-INIT which comprises an actuating interface ACT being coupled to an interpreting means i.e. an interpreter INTER which on its turn is coupled to a transmitter TX. The transmitter TX is coupled via respectively an interface of the local home equipment and a broadband virtual architecture that comprises a virtual instance controller VIC for performing lifecycle management and a local agent LA on a physical machine, towards a virtual home environment controller VHEC in the internet telecommunication network.

The virtual home environment controller VHEC further comprises a receiver REC, a memory MEM and a set of virtual home equipments VHE1, VHE2, VHE3 ..., VHE8. The receiver REC is coupled to an interface of the virtual home environment controller VHEC, to the memory MEM and to the set of virtual home equipments VHE1, VHE2, VHE3 ..., VHE8.

According to the broadband virtual architecture, each local home equipment such as e.g. LHE1 in a respective home network environment HN is associated to a virtual home equipment VHE1 in a virtual home environment controller VHEC. The local home equipment LHE1 is hereby enabled to execute a first part of the home equipment functionality and the virtual home equipment VHE1 is enabled to execute a second part of the home equipment functionality. Furthermore, each virtual home equipment VHE1 in the virtual home environment controller is associated to a user subscription such as e.g. US1.

The actuating interface ACT of the re-initializing device is enabled for being actuated by a user e.g. U1. This user is associated by means of the user subscription US1 to the local home equipment LHE1. Different kind of rules can be defined in order to implement different ways of executing the actual actuation. Therefore the re-initializing device comprises the interpreter INTER which interprets the way of executing the actuating step and the actuated part of the actuating interface. The interpreter INTER determines thereby e.g. the type of re-initialization and the affected equipment i.e. the equipment that needs to be re-initialized. The affected equipment is hereby either the local home equipment or the virtual home equipment or both. A possible implementation of the way of actuating is realized by means of a definition of different rules such as the time period of actuating the actuating interface by the user U1. This time period can for instance be determined as 3 seconds in order to determine a restart (soft reboot); 10 second in order to determine a reset (hard reboot or shortly reboot) of the affected equipment or more than 30 seconds in order to determine a software rollback , etc.

As mentioned above a restart (soft reboot) is anything that uses only software to reboot the kernel of the affected equipment. In a soft reboot, power is never removed from the kernel. The kernel is a computer program that manages input/output requests from software, and translates them into data processing instructions for the central processing unit and other electronic components of a computer. A kernel connects the application software to the hardware of the equipment.

A reset (hard reboot) is defined as a reboot that removes the power from the equipment i.e. pressing the hard reboot button or unplugging the controller. A button or a switch on the equipment that allows to turn the equipment off and then on again when e.g. a program is not working correctly.

A software rollback is the operation of restoring a software environment to a previous stable state or snapshot by undoing all changes that were done after this snapshot. This is usually performed by replacing completely the current environment by the one at the given snapshot. So, a software rollback is defined as the process of loading software again after there has been a problem with the original software.

The rules or physical means on the home equipment in order to implement the actuating interface can be more complex as well, for example, one button per specific type of re-initialization

It has to be remarked that it is also beneficial that a copy of the virtualized home equipment is performed before any action is taken.

In the event when the interpreting means has determined the type (Type) of re-initialization and the affected equipment (Equip), the information is provided to the transmitter TX.

The transmitter TX generates the respective messages.

In the event when only the local home equipment is affected, EQUIP=LHE1, only a local initialization signal is generated INIT" in order to execute the respective defined type of re-initialization on the local home equipment LHE1. The signal INIT" might comprise as well the desired type of re-initialization of the local equipment.

In the event when only the virtual home equipment is affected, EQUIP=VHE1, a predefined message INIT(US1) is generated by the transmitter TX. The reference towards the user subscription US1 and optionally also the type of re-initialization are is comprised in the predefined message. The message is transmitted by the transmitter TX according to a predefined protocol towards the virtual home environment controller (VHEC). The message can be sent out of band over a dedicated channel such as e.g. a GRE tunnel, dedicated internet protocol IP-endpoint, MPLS label, VLAN, etc.

In the event when both equipments are affected, EQUIP=(LHE1; VHE1) a local signal and a predefined message are both generated by the transmitter TX, and sent in appropriate sequence and order to the respective parties.

It has to be remarked that the reference towards the user subscription can be implemented by a reference towards the associated virtual home equipment VHE1 or a reference towards the local home equipment LHE1.

According to the above situations whereby a message INIT(US1) is generated for the virtual home environment controller, the message INIT(US1) is forwarded via the virtual architecture including the virtual instance controller VIC and a local agent LA.

The message is received by the receiver REC of the virtual home environment controller VHEC. The receiver REC retrieves the included user subscription US1 and optionally also the type of re-initialization (soft reboot; hard reboot; software rollback; ... ).

The receiver REC determines the affected virtual home equipment VHE1 based upon the user subscription US1 i.e. the receiver REC retrieves with the users subscription US1 from the memory MEM the associated virtual home equipment VHE1.

Finally the receiver REC generates are-initialization signal INIT' for re-initializing of the determined virtual home equipment VHE1.

A possible implementation of the present invention is to predefine the type of re-initialization at the virtual home environment controller. Hereby a same type of re-initialization is always performed.

Another way of implementing the present invention is to predefine different types of re-initialization at the interpreting means INTER and at the receiver REC. Hereby and based upon the inclusion of one of the different types of re-initialization in the predefined message an additional choice is provided to the user. In this way and in function of the received type of re-initialization the receiver generates e.g. a signal INIT' for the kernel of the respective affected virtual home equipment VHE1 which processes the signal and executes a soft reboot or e.g. the receiver processes the trigger by itself in order to impose upon the affected virtual home equipment VHE1 a hard reboot.

It has to be explained that according to an alternative implementation the intelligence of the interpreting means INTER on the local home equipment LHE1 is reduced to only monitor e.g. the number of times and the duration that the actuating interface ACT has been triggered. This collected information is comprised in the message INIT and transmitted to the receiver REC on the virtual home environment controller. In addition the receiver REC is further programmed and configured in order to determine the kind of recovery action is required to be performed.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Method for re-initializing a virtualized home equipment in a broadband virtual architecture, said virtualized home equipment comprising at least one local home equipment (LHE1) in a respective home network environment being associated to a virtual home equipment (VHE1) in a virtual home environment controller (VHEC) of the internet telecommunication network, and said virtualized home equipment (LHE1; VHE1) running a first part of said home equipment functionality on said local home equipment (LHE1) and a second part of said home equipment functionality on said virtual home equipment (VHE1), each said virtual home equipment (VHE1) being associated to a respective user subscription,
**characterized in that** said method comprises
- actuating by a user (U1) an actuating interface (ACT) of said local home equipment (LHE1), said user (U1) being associated by means of a user subscription (US1) to said local home equipment (LHE1); and
- transmitting by a transmitter (TX) towards said virtual home environment controller (VHEC) a predefined message (INIT1(US1)) that comprises a reference to said user subscription (US1); and
- upon reception of said message by said virtual home environment controller (VHEC) determining said virtual home equipment (VHE1) based upon said received user subscription (US1) and re-initializing said determined virtual home equipment (VHE1) accordingly.

2. The method for re-initializing a virtualized home equipment according to claim 1, **characterized in that** said method comprises interpreting by an interpreting means (INTER) of said local home equipment anyone of the way of executing said actuating step and the actuated part of said actuating interface and determining thereby at least one of a type of re-initialization and an affected equipment being anyone of said local home equipment and said virtual home equipment.

3. The method for re-initializing a virtualized home equipment according to claim 2, **characterized in** by implementing said type of re-initialization by anyone of restarting, rebooting and software rollback.

4. The method for re-initializing a virtualized home equipment according to claim 2, **characterized in** by comprising in said predefined message a reference towards said type of initialization.

5. The method for re-initializing a virtualized home equipment according to claim 1, **characterized in that** said home network environment comprises a residential gateway whereby said local home equipment (LHE1) being implemented by means of a bridge or a routed modem.

6. The method for re-initializing a virtualized home equipment according to claim 1, **characterized in that** upon said step of actuating also re-initializing said local home equipment (LHE1).

7. The method for initializing a virtualized home equipment according to claim 1, **characterized in** by implementing said reference towards said user subscription by anyone of a reference towards said associated virtual home equipment (VHE1) and a reference towards said local home equipment (LHE1).

8. Re-initializing device (RE-INIT) for re-initializing of a virtualized home equipment in a broadband virtual architecture that comprises at least one local home equipment (LHE1) in a respective home network environment and, being associated thereto, a virtual home equipment (VHE1) in a virtual home environment controller (VHEC) in the internet telecommunication network, whereby said local home equipment (LHE1) being enabled to execute a first part of said home equipment functionality and said virtual home equipment (VHE1) being enabled to execute a second part of said home equipment functionality, each said virtual home equipment (VHE1) being associated to a user subscription, **characterized in that** said re-initializing device (RE-INIT) being comprised in said local home equipment (LHE1) and comprises :
- an actuating interface (ACT) for being actuated by a user (U1), said user being associated by means of a user subscription (US1) to said local home equipment (LHE1); and
- a transmitter (TX) for transmitting towards said virtual home environment controller (VHEC) a predefined message (INIT1(US1)) that comprises a reference towards said user subscription (US1) in order to enable said virtual home environment controller (VHEC) to determine said virtual home equipment (VHE1) based upon said received user subscription (US1) and to re-initialize said virtual home equipment (VHE1) accordingly.

9. The re-initializing device (RE-INIT) according to claim 8, **characterized in that** said device further comprises an interpreting means (INTER) for interpreting anyone of the way that said actuating interface (ACT) being actuated and which part of said actuating interface (ACT) being actuated and for determining thereby at least one of a type of re-initialization and an affected equipment being anyone of said local home equipment and said virtual home equipment.

10. The re-initializing device (RE-INIT) according to claim 9, **characterized in** by implementing said type of re-initialization by anyone of restarting, rebooting and software rollback.

11. The re-initializing device (RE-INIT) according to claim 9, **characterized in that** said predefined message comprises a reference towards said type of re-initialization.

12. The re-initializing device (RE-INIT) according to claim 8, **characterized in that** said home network environment comprises a residential gateway whereby said local home equipment (LHE1) being implemented by means of a bridge or a routed modem.

13. The re-initializing device (RE-INIT) according to claim 8, **characterized in that** said re-initializing device further generates a local message for re-initializing said local home equipment (LHE1).

14. The re-initializing device (RE-INIT) according to claim 8, **characterized in** by implementing said reference towards said user subscription (US1) by anyone of a reference towards said associated virtual home equipment (VHE1) and a reference towards said local home equipment (LHE1).

15. A virtual home environment controller (VHEC) in an internet telecommunication network for re-initializing a virtualized home equipment in a broadband virtual architecture, said architecture comprises at least one local home equipment (LHE1) in a respective home network environment being associated to a virtual home equipment (VHE1) being comprised in said virtual home environment controller (VHEC) whereby said local home equipment (LHE1) being enabled to execute a first part of said home equipment functionality and said virtual home equipment (VHE1) being enabled to execute a second part of said home equipment functionality, said virtual home environment equipment comprises a memory (MEM) for storing an association between each said virtual home equipment (VHE1) and its user subscription, **characterized in that** said virtual home environment controller comprises
a receiver (REC) for receiving from a re-initialization device (RE-INIT) according to claim 8 a predefined message (INIT1(US1)) comprising a reference to a user subscription (US1) and for determining a virtual home equipment (VHE1) based upon said reference (US1) and for generating a re-initialization signal (INIT') for re-initializing said determined virtual home equipment.
